(19) Europäisches Patentamt
European Patent Office
Office européen des brevets

(11) Publication number: 0 242 425 B1

(12) **EUROPEAN PATENT SPECIFICATION**

(45) Date of publication of patent specification: **12.08.92** (51) Int. Cl.⁵: **G01N 23/20**

(21) Application number: **86107348.4**

(22) Date of filing: **30.05.86**

(54) **Method for evaluating residual fatigue life of mechanical parts.**

(30) Priority: **21.04.86 JP 90025/86**

(43) Date of publication of application:
**28.10.87 Bulletin 87/44**

(45) Publication of the grant of the patent:
**12.08.92 Bulletin 92/33**

(84) Designated Contracting States:
**CH DE GB LI**

(56) References cited:
**DE-A- 3 047 792**
**US-A- 4 287 416**

(73) Proprietor: **MITSUBISHI JUKOGYO KABUSHIKI KAISHA**
**5-1, Marunouchi 2-chome Chiyoda-ku**
**Tokyo 100(JP)**

(72) Inventor: **Touru, Goto c/o Takasago Tech. Inst. of**
**Mitsubishi Jukogyo K. 1-1 Shinhama 2-chome**
**Arai-cho Takasago-shi Hyogo-ken(JP)**
Inventor: **Takashi, Konishi c/o Takasago Tech. Inst. of**
**Mitsubishi Jukogyo K. 1-1 Shinhama 2-chome**
**Arai-cho Takasago-shi Hyogo-ken(JP)**

(74) Representative: **Henkel, Feiler, Hänzel & Partner**
**Möhlstrasse 37**
**W-8000 München 80(DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

BACKGROUND OF THE INVENTION:

Field of the Invention:

The present invention relates to improvements in a method for evaluating a residual fatigue life of mechanical parts.

Description of the Prior Art:

Heretofore, in a process of maintenance and control for mechanical parts a defect hunting inspection was carried out, but according to this inspection it was only possible to determine whether the parts have reached their life or not. As methods for estimating about when cracks will be generated from a result of an inspection conducted prior to generation of cracks, a method of detecting changes in the nature of material which arise prior to generation of cracks and a method of observing micro cracks can be conceived, but either one of the methods is poor in precision, and there was almost no example of success as a practical method.

US-A-4 287 416 discloses a method for evaluating a residual fatigue life of mechanical parts. In this method the half-width X-ray diffraction intensity data of a sample surface are collected and compared to the half-width data of an unfatigued material.

However, according to this known method, the surface of the mechanical part to be inspected is not ground off. Further, the half-width values are detected by different X-ray tubes and compared to each other.

This method is suitable to mechanical parts which are surface-hardened. The different X-ray tubes provide X-rays which are capable to intrude into the material to be inspected to different extents.

As a representative one of the method for detecting changes in the nature of material, there is a method of making use of the X-ray diffraction process and paying attention to changes in a profile of the diffracted X-rays. Now description will be made on outline of this method with reference to Fig. 7.

Fig. 7 is a schematic diagram showing a general X-ray diffraction intensity curve, and a half-width indicated in this figure means a width of a peak at a 1/2 height of the peak in a profile of the diffracted X-rays. Representing the half-width by H and that before use by Ho, then as shown, for example, in Fig. 8, a half-width ratio H/Ho at the surface of a test sample has good correlation to a fatigue defect ratio N/Nf (N: number of repetitions of stress, Nf: number of repetitions of stress at breakdown). Accordingly, a degree of fatigue defect can be estimated from a half-width ratio.

However, in the case of the first-mentioned method relying upon defect hunting, a precision is poor and the method is not practically available. Second, in the case of estimating a degree of fatigue defect from a profile of diffracted X-rays, since a gradient of change of a half-width ratio H/Ho with respect to a fatigue defect ratio N/Nf in the second period II which occupies most of a fatigue life is small as shown in Fig. 8, a precision in prediction of a life is poor. More particularly, with reference to Fig. 8, although change of nature of material occurs remarkably in the first period I, in the second period II change of nature of material at the surface is relatively stablized, then the energy accumulated by repeated stress is consumed rather by irreversible and microscopic deformation at the surface layer, resulting in nuclei of cracks and the nuclei breeds. The third period III involves the process of generation and propagation of cracks, and this period is outside of the object of a life. Taking into consideration these mechanisms leading to generation of fatigue cracks, with the half-width measuring method of the surface making use of the X-ray diffraction process, improvements in a precision of prediction of a life cannot be achieved.

SUMMARY OF THE INVENTION:

It is therefore one object of the present invention to provide an improved method for evaluating a residual fatigue life of mechanical parts making use of the X-ray diffraction process which is free from the shortcomings of a similar method in the prior art.

A more specific object of the present invention is to provide a method for evaluating a residual fatigue life of mechanical parts, which has a high precision even in the second period of a fatigue life.

According to one feature of the present invention, there is provided a method for evaluating a residual fatigue life of mechanical parts, consisting of the steps as claimed in the independent claim.

In the second period II, while changes of nature of material are relatively stabilized on the surface, the changes of nature of material proceed towards the interior of the material during this second period II, and therefore, according to the present invention, since a depth of a surface layer in which changes of nature of material have occurred is measured and used as a parameter for evaluating the residual fatigue life, a precision of evaluation of the residual fatigue life can be enhanced.

In the above-featured method for evaluating a residual fatigue life of mechanical parts according to the present invention, the initial value Ho of the half-width H is not known in general inspections, and so, a half-width value measured at a location where a loaded stress is small and the material is almost not subjected to fatigue defect, is substituted therefor. However, in a mechanical structure, since the nature of material is already not uniform at the time of manufacture, and so, in practice a location where the material is not subjected to fatigue defect, which location is as close as possible to the location where fatigue is to be detected, is sought, and the most probable initial value Hwo obtained by measuring a half-width value H at that location is substituted for the initial value Ho.

DESCRIPTION OF THE PRINCIPLE OF THE INVENTION:

From a change of profiles of diffracted X-rays at the successive points on an inspection surface that was ground by a minute amount, data as shown in Fig. 3 are obtained. Representing a depth from a surface at the successive measuring positions $\underline{x}$ by $\underline{d}$, geometrically it can be calculated from the following equation:

$$d = R - \sqrt{R^2 + \left(\frac{\ell}{2} - x\right)^2 - \left(\frac{\ell}{2}\right)^2}$$

Therefore, if a half-width ratio H/Ho is plotted as a function of the depth $\underline{d}$, then a graph shown in Fig. 4 is obtained.

From a cross-point between two straight lines in Fig. 4, a depth $\underline{d_o}$ of a defective region can be determined. Hence, on the basis of data correlating the depth $\underline{d_o}$ with an amount of fatigue defect D that were separately obtained with respect to a test piece, the amount of fatigue defect can be determined from the depth $\underline{d_o}$ (See Fig. 5).

BRIEF DESCRIPTION OF THE DRAWINGS:

In the accompanying drawings:

Fig. 1 is a schematic illustration of an X-ray diffraction system to be used for practicing the method for evaluating a residual fatigue life of mechanical parts according to the present invention;

Fig. 2 is a flow chart of a computer used in the system shown in Fig. 1;

Fig. 3 is a diagrammatic representation of data picked up;

Fig. 4 is a diagram prepared by rearranging the data in Fig. 3 into the form of a half-width ratio (H/Ho) versus a depth (d) from a surface;

Fig. 5 is a diagram of a depth ($d_o$) of a defective region versus an amount of fatigue defect (D);

Fig. 6 is a schematic view of an apparatus for forming an inspection surface;

Fig. 7 is a diagram to be used for explaining a half-width of an X-ray diffraction curve; and

Fig. 8 shows determination curves in the prior art used for estimating a degree of defect from changes of a half-width at the location to be detected.

DESCRIPTION OF THE PREFERRED EMBODIMENT:

Now one preferred embodiment of the present invention will be explained with reference to Figs. 1 through 7.

An inspection surface is formed by grinding a surface layer of a mechanical part to be inspected by a minute amount. For this formation of an inspection surface, for example, the means disclosed in copending Japanese Patent Application No. 60-53796 (see Fig. 6) could be employed.

From a diagram of an X-ray diffraction intensity curve on the above-referred inspection surface (See Fig. 7), data (a half-width H versus a measuring position $\underline{x}$) as shown in Fig. 3 are picked up. In Fig. 3, in the case where a flat portion appears at the position corresponding to the center of a chord formed by grinding a member, the half-width H at the flat portion is employed as a half-width Ho of unused material, half-width lines are extrapolated at the opposite end positions of the chord to obtain a half-width H at a fatigue defect portion. The half-width Ho obtained at the flat portion is the most probable original half-width Hwo. Upon picking up these data, for example, the means disclosed in copending Japanese Patent Application No. 60-53797 could be employed.

The respective measuring positions are represented in terms of horizontal coordinate x (See Fig. 3), and representing a radius of a circular member to be inspected by R and a length of the chord formed as an inspection surface by $\ell$, the horizontal coordinate x can be transformed into a depth d from a surface by the following formula:

$$d = R - \sqrt{R^2 + \left(\frac{\ell}{2} - x\right)^2 - \left(\frac{\ell}{2}\right)^2}$$

Then, the half-width ratio H/Ho can be plotted as a function of the depth d. This is shown in Fig. 4.

These plotted data align on two intersecting straight lines. More particularly, at the positions of deep depth d, the data align on a flat horizontal line, and in a defective region where the depth d is smaller, the data points deviates linearly from the level of the flat straight line. Therefore, the cross-point between these two imaginary straight lines are sought by statistically analyzing the data, and from the horizontal coordinate of the cross-point, a depth $d_o$ of the defective region is determined.

The relation between the depth $d_o$ and the amount of fatigue defect D is separately measured by means of a test piece, and the amount of fatigue defect D is determined on a diagram of the depth $d_o$ versus the amount of fatigue defect D.

At a large amount of fatigue defect D, the possibility that microscopic cracks may be generated is large. Therefore, checking of the amount of fatigue defect D estimated by the method relying upon X-ray diffraction can be effected by carrying out observation of the inspection surface at the very surface in the proximity of the opposite ends of the prepared inspection surface. In addition, at the large amount of fatigue defect D, changes of the half-width ratio (H/Ho) [H represents a half-width at the surface obtained by extrapolation.] is large. Therefore, the confirmation can be done also through the method in the prior art illustrated in Fig. 8.

It is to be noted that microscopic cracks are present within a very shallow surface layer. Therefore, although the observation of a practically operating mechanical part to which scale has adhered as a result of use was impossible, in the method of forming an inspection surface according to the above-referred copending Japanese Patent Application No. 60-53796, the surface layer is cut away obliquely so as to be exposed, and so, the observation becomes easy.

Now, description will be made on an X-ray diffraction apparatus shown in Fig. 1. The diffraction apparatus is composed of an X-ray tube 1, a slit 2 and a detector 3, and these component parts are disposed on a movable base plate 4 that is common to an inspection surface forming apparatus (Fig. 6). A detection signal issued from the detector 3 is sent through a data pick-up and control section 5 to a computer 6, and control signals issued from the computer 6 are transmitted via the data pick-up and control section 5 to a drive section for the movable base plate 4 and the detector 3. The apparatus operates as follows:

(1) Under control of the computer 6, each time the X-ray diffraction apparatus has picked up an X-ray diffraction curve for a given position at a distance x, the movable base plate 4 is automatically advanced in a stepwise manner. Each time, the distance x and the corresponding half-width H of the X-ray diffraction curve are calculated and recorded.

(2) A diagram of the half-width ratio H/Ho versus the depth d is produced by the computer 6, and then it is determined whether or not a highly probable original half-width Ho has been obtained. If the probability is not sufficient, the inspection surface is ground again to obtain a larger cross-section chord length $\ell$.

(3) Then, the depth $d_o$ of the defective region is read out from the diagram of H/Ho versus d.

(4) On the basis of this value of the depth $d_o$, the amount of fatigue defect D is determined. If the amount of fatigue defect D is large, an instruction for observation of microscopic cracks is issued.

(5) As a result of the observation of microscopic cracks, if microscopic cracks are observed, an instruction is issued from the computer 6 that any disposal should be done early.

(6) If microscopic cracks are not present, an instruction is issued from the computer 6 that reinspection should be carried out early.

(7) In the event that the amount of fatigue defect D is small, on the basis of the value obtained by subtraction of 1-D, the time when inspection should be carried out next, is determined.

The operation steps (1) to (7) above are programmed as a software in the computer 6. That is, the operation of the computer 6 is represented in a flow chart as shown in Fig. 2.

Since the present invention is characterized by the above-described features, the following advantages can be obtained.

(1) Owing to the fact that upon determining an amount of fatigue defect, a depth of a surface layer in which changes of nature of material have occurred is measured and it is used as a parameter for evaluating a residual life, a precision of evaluation of the residual life can be enhanced.

(2) In addition, a precision of evaluation of the residual life can be enhanced by employing a half-width value measured at a location where the mechanical part to be inspected is not subjected to fatigue defect, which location is as close as possible to the location where fatigue is to be detected, as an initial half-width value Ho.

## Claims

**1.** A method for evaluating a residual fatigue life of mechanical parts characterised by the steps of:

- grinding off a surface layer of said mechanical part in an area that is to be exposed to X-rays, that has not been exposed to stress and thus can be employed as representing unused material;
- measuring an X-ray intensity curve vs. the angle of diffraction for different positions (X) of said surface;
- plotting the half-width value (H) of said curve against the corresponding measuring position (X), where in the plotted function has a linearly increasing part followed by a constant horizontal half-width value (Ho) which represents the half-width (Hwo) of the unused material;
- transforming the measuring position (X) to a function of depth (d) of penetration according to the following equation:

$$d = R - \sqrt{R^2 + \left(\frac{\ell}{2} - x\right)^2 - \left(\frac{\ell}{2}\right)^2}$$

wherein the respective measuring position is represented in term of the horizontal coordinate x, the radius of a circular member to be inspected is represented by R, and the length of the chord formed as an inspection surface is represented by $\ell$;

- deforming a normalized half-width function (H/Hwo) versus the depth d; and
- determining the point do, where the linearly increasing part of the function meets the constant part of the intensity curve, which point (do) represents an indication of the fatigue defect (Δ).

## Revendications

**1.** Méthode d'évaluation de la résistance résiduelle à la fatigue de pièces mécaniques, caractérisée par les opérations suivantes:

- meulage d'une très petite quantité d'une couche superficielle de ladite pièce mécanique dans une zone qui doit être exposée aux rayons X, qui n'a pas été exposée à des contraintes et peut ainsi être employée comme représentant un matériau qui n'a pas été utilisé;
- mesure d'une courbe d'intensité de rayons X en fonction de l'angle de diffraction pour différentes positions (X) de ladite surface;
- traçage de la valeur (H) à mi-largeur de cette courbe en fonction de la position de mesure (X) correspondante, où la fonction tracée a une partie à croissance linéaire suivie d'une valeur à mi-largeur (Ho) horizontale constante qui représente la demi-largeur (Hwo) du matériau non utilisé;
- transformation de la position de mesure (X) en une fonction de la profondeur de pénétration (d) selon l'équation suivante:

$$d = R - \sqrt{R^2 + \left(\frac{\ell}{2} - x\right)^2 - \left(\frac{\ell}{2}\right)^2}$$

où la position de mesure respective est représentée en fonction de la coordonnée horizontale x, le rayon d'un élément circulaire à examiner est représenté par R et la longueur de la corde formée comme une surface d'examen est représentée par ℓ ;

- déformationd'une fonction à mi-hauteur (H/Hwo) normalisée en fonction de la profondeur d; et
- détermination du point do où la partie à croissance linéaire de la fonction rencontre la partie constante de la courbe d'intensité, ce point (do) représentant une indication du défaut de fatigue (Δ).

## Patentansprüche

**1.** Verfahren zur Bewertung der Restermüdungs(lebens)dauer mechanischer Teile, gekennzeichnet durch folgende Schritte:

- Abschleifen einer Oberflächenschicht des mechanischen Teils in einem Bereich, der mit Röntgenstrahlung zu bestrahlen ist, der keiner Spannung oder Beanspruchung unterworfen worden ist und der mithin als unbenutzten Werkstoff repräsentierend verwendet werden kann,
- Messen einer Röntgenintensitätskurve gegen den Beugungswinkel für verschiedene Stellen (X) (an) der Oberfläche,
- Auftragen des Halbbreitenwerts (H) der Kurve gegen die Meßstelle (X), wobei die aufgetragene Funktion einen sich linear erhöhenden oder ansteigenden Teil, gefolgt von einem konstanten horizontalen Halbbreitenwert (Ho), welcher die Halbbreite (Hwo) des unbenutzten Werkstoffs darstellt, aufweist,
- Transformieren der Meßstelle (X) in eine Funktion der Eindringtiefe (d) nach folgender Gleichung:

$$d = R - \sqrt{R^2 + (\frac{\ell}{2} - x)^2 - (\frac{\ell}{2})^2}$$

  in welcher die betreffende Meßstelle durch die horizontale Koordinate x dargestellt ist, der Radius eines zu prüfenden kreisrunden Elements mit R und die Länge einer als Prüffläche geformten Sehne mit 1 bezeichnet sind,
- Umformen einer normierten Halbbreitenfunktion (H/Hwo) gegen die Tiefe d und
- Bestimmen des Punkts do, an welchem der linear ansteigende Teil der Funktion in den konstanten Teil der Intensitätskurve übergeht, welcher Punkt (do) ein Anzeichen des Ermüdungsdefekts oder -fehlers (Δ) repräsentiert.

FIG.1

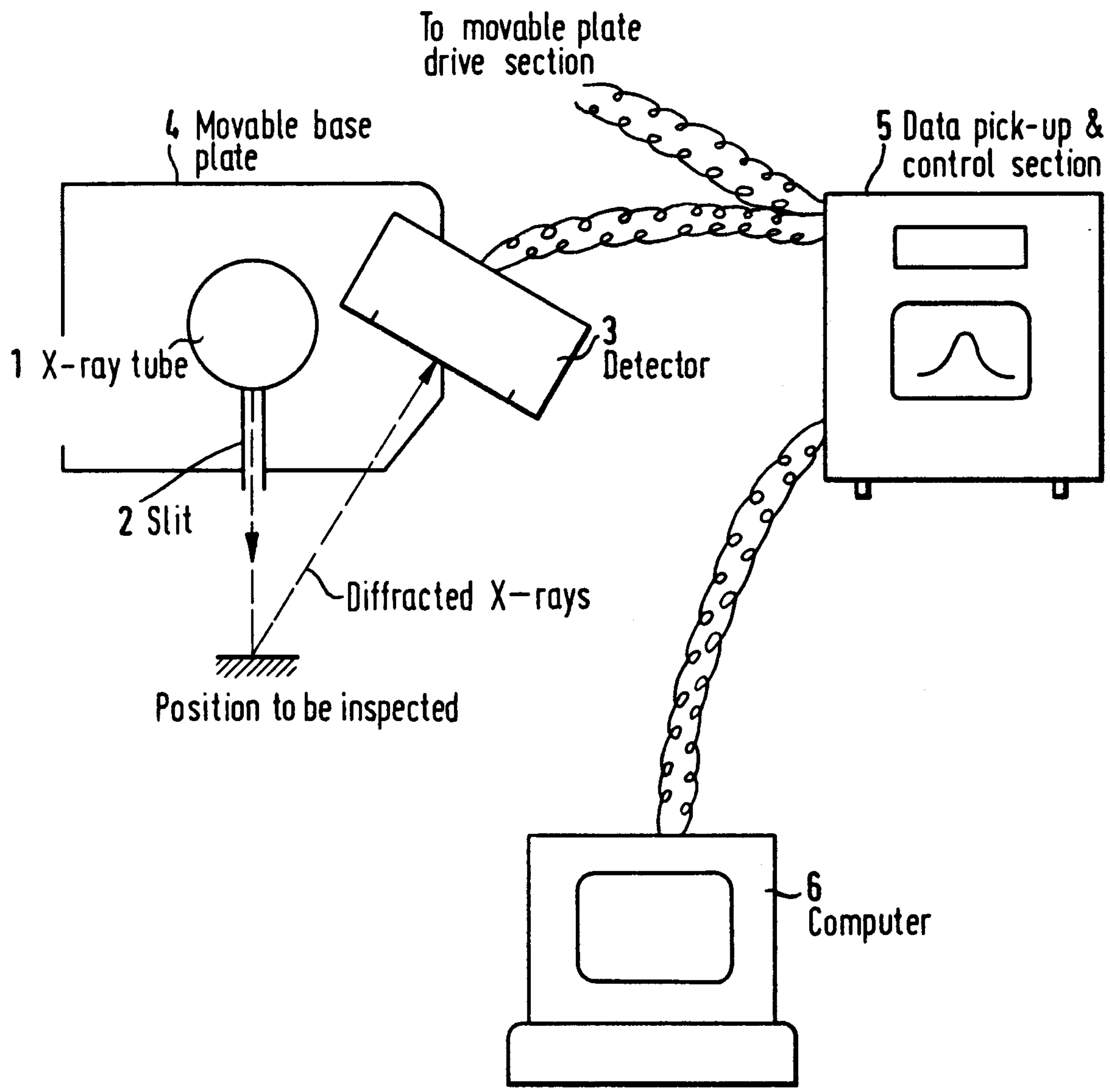
To movable plate
drive section
4 Movable base
plate
5 Data pick-up &
control section
1 X-ray tube
3
Detector
2 Slit
Diffracted X-rays
Position to be inspected
6
Computer

FIG. 2

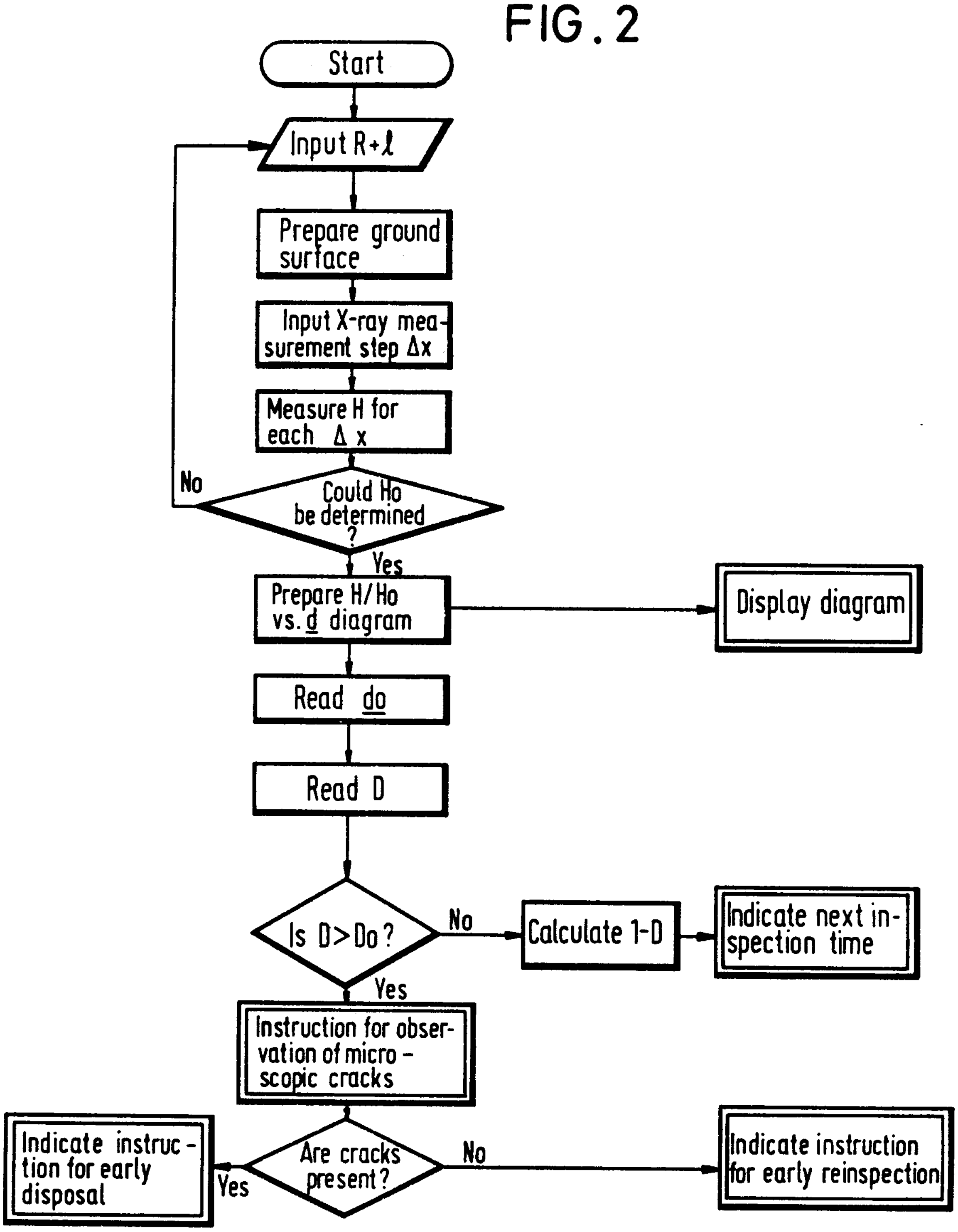
Start
Input R+ℓ
Prepare ground surface
Input X-ray measurement step Δx
Measure H for each Δx
Could Ho be determined?
No
Yes
Prepare H/Ho vs. d diagram
Display diagram
Read do
Read D
Is D>Do?
No
Calculate 1-D
Indicate next inspection time
Yes
Instruction for observation of microscopic cracks
Are cracks present?
Yes
Indicate instruction for early disposal
No
Indicate instruction for early reinspection

FIG. 3

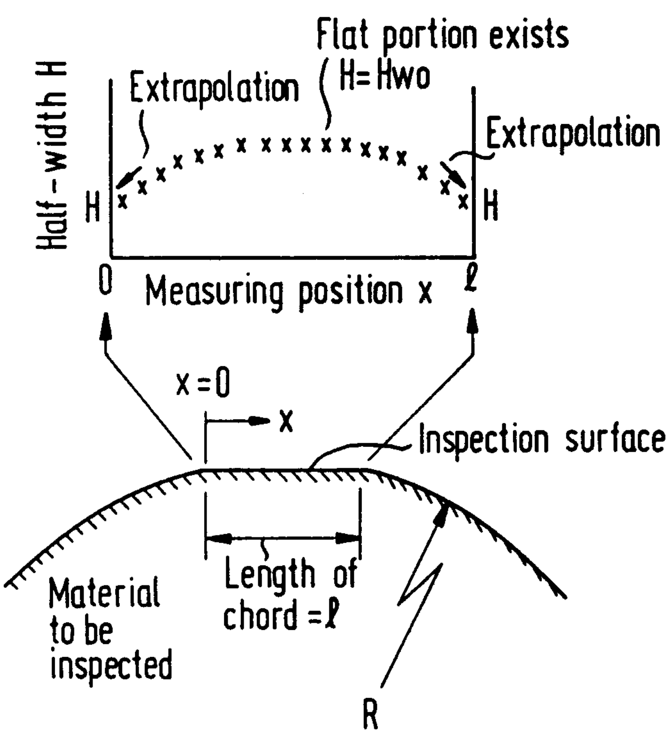
Flat portion exists
H=Hwo
Extrapolation
Extrapolation
Half-width H
H
H
0
Measuring position x
ℓ
x=0
x
Inspection surface
Material to be inspected
Length of chord =ℓ
R

FIG.4

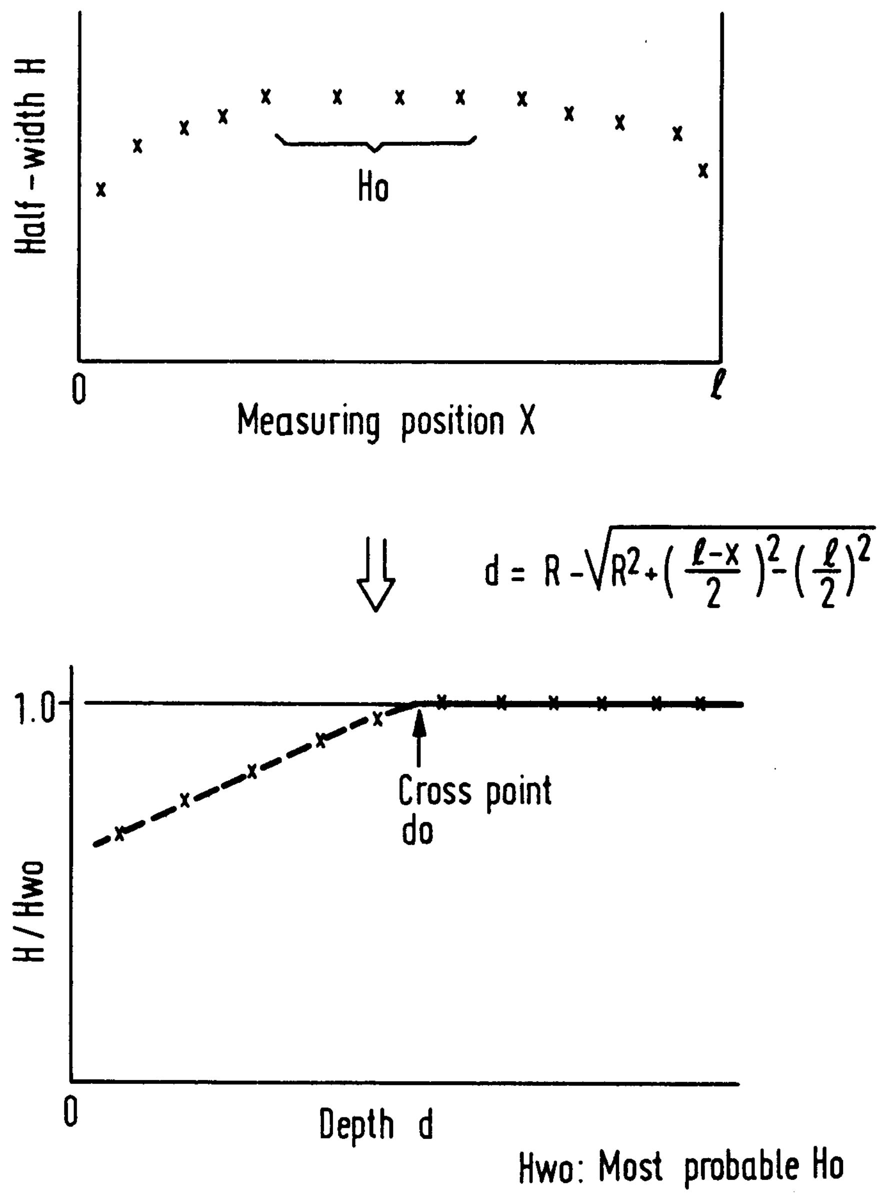
Half-width H
Ho
0
ℓ
Measuring position X
d = R - √(R² + ((ℓ-x)/2)² - (ℓ/2)²)
1.0
H/Hwo
Cross point
do
0
Depth d
Hwo: Most probable Ho

FIG.5

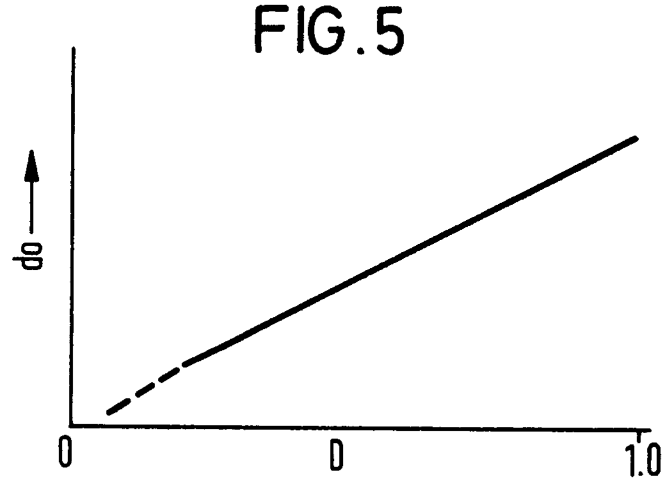
do
0
D
1.0

FIG.7

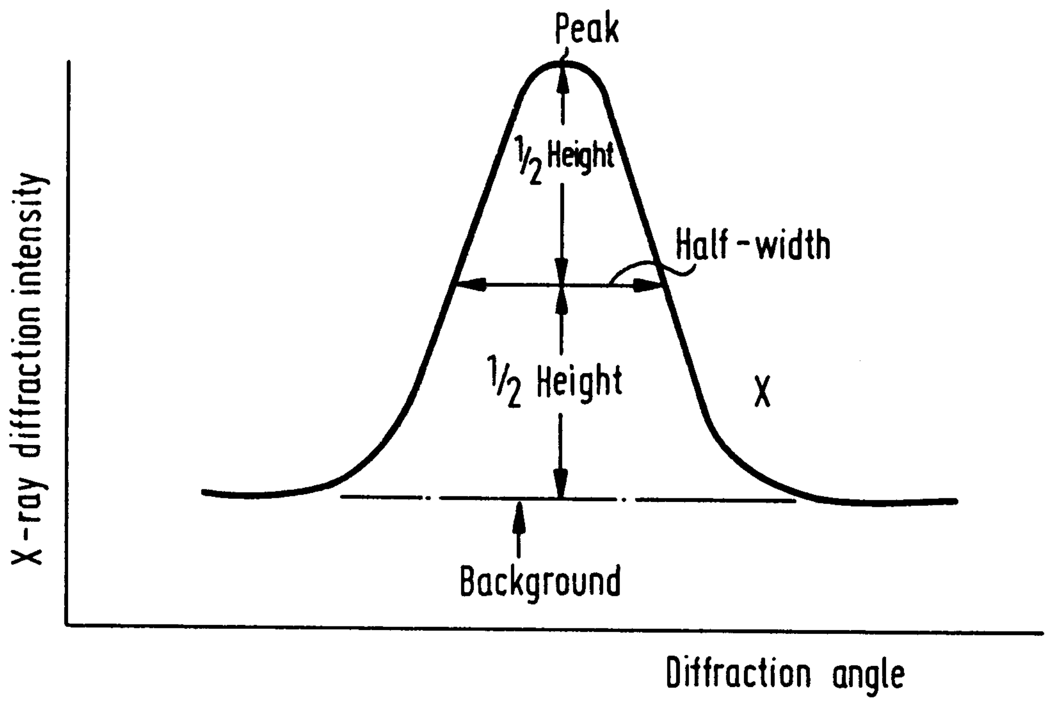
Peak
1/2 Height
Half-width
1/2 Height
X
Background
X-ray diffraction intensity
Diffraction angle

FIG.6

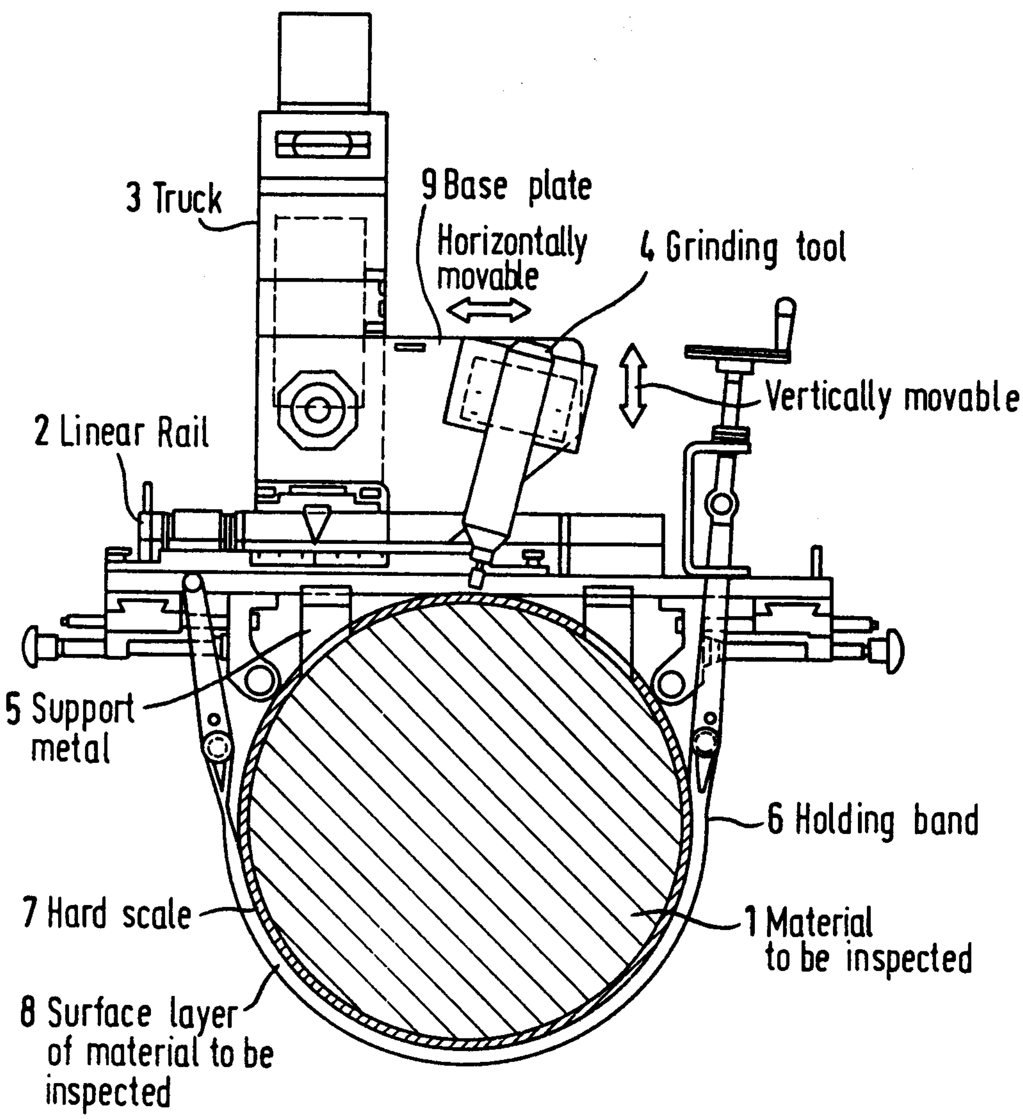
3 Truck
9 Base plate
Horizontally movable
4 Grinding tool
Vertically movable
2 Linear Rail
5 Support metal
6 Holding band
7 Hard scale
1 Material to be inspected
8 Surface layer of material to be inspected

FIG.8

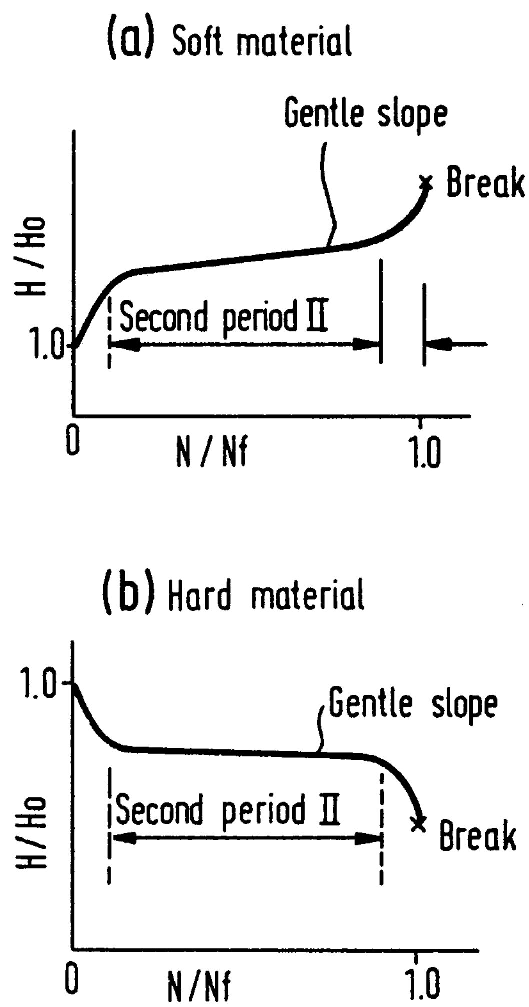
(a) Soft material
Gentle slope
Break
H / Ho
1.0
Second period II
0
N / Nf
1.0
(b) Hard material
1.0
Gentle slope
Second period II
Break
H/Ho
0
N/Nf
1.0